# EUROPEAN PATENT SPECIFICATION

(11) **EP 0 777 878 B1**
(45) Date of publication and mention of the grant of the patent: **07.08.2002**
(21) Application number: 95930781.0
(22) Date of filing: 01.09.1995
(51) Int. Cl.: G06F 9/455

(54) **A METHOD AND A SYSTEM FOR TESTING AN INTERFACE**
VERFAHREN UND SYSTEM ZUR PRÜFUNG EINER SCHNITTSTELLE
PROCEDE ET SYSTEME DE TEST D'INTERFACE

(30) Priority: 02.09.1994 SE 9402921
(43) Date of publication of application: 11.06.1997
(73) Proprietor: TELEFONAKTIEBOLAGET LM ERICSSON, 126 25 Stockholm (SE)
(72) Inventor: SMITH, Ola, S-175 40 Järfälla (SE)
(74) Representative: Rosenquist, Per Olof
(86) International application number: SE9500986
(87) International publication number: WO9607968

(56) References cited:
- WO-A-92/15961
- WO-A-92/15962
- SE-B- 467 229
- PATENT ABSTRACTS OF JAPAN, Vol. 17, No. 277, P-1546; & JP,A,05 011 933, (NEC SOFTWARE LTD), 22 January 1993.

## Description

### Technical Field of the Invention.

The present invention relates to a method and a system for providing a reference model for a communication system, in which program wares shall be able to communicate with each other via a protocol using the services offered over a service interface by the protocol.

When two program ware units which are designed and maintained independently of each other shall interact the rules for the interaction are described in an interface. This interface shall contain all the knowledge required for the designer of a program ware unit to be able to use functions in another program ware unit. Contrary thereto, such that the designer need not know about this other program ware unit, the functions of which are used, shall be hidden by the interface. The object of this is that the program offering the functions shall have the liberty of being freely changed within the frame of the interface.

Usually an interface is defined in syntactical terms, i.e. it is shown what a correct call of the function in the second program is permitted to look like. These definitions are, as a rule, formal and exact. In a syntax analysis of the function calling program all calls with an erroneous appearance, e.g. misspellings are inexorably revealed. Contrary thereto semantic rules, i.e. such indicating how the function call is allowed to be used, are seldom formal and seldom complete. A concrete example: To turn the ignition key of a car clockwise is always a syntactically correct operation. Contrary thereto it is semantically erroneous if the engine is already running.

### Description of Related Art.

EP 474,339 discloses a technique for providing a client interface for an object oriented call of an application. One wishes to avoid problems arising from users having earlier, in heterogeneous networks, been forced to use the particular interface that each individual application has required. The object is to provide interaction of processes in an object oriented way. Client applications can call other applications by sending globally known messages with parameters. A client/server model is used in which a client generates desires and a server responds to the desires.

EP 540,166 discloses a technique in an object oriented distributed system based upon a client/server model. More particularly, there is the question of a case in which a client process shall determine whether two objects implemented by a first and a second server process, respectively, are equivalent, object oriented interfaces being provided for manipulating the respective objects. This shall be performed in connection with object oriented programming in a distributed computer system.

In EP 278,317 there is described a technique for preventing a process in a client process system to access data in a client cache memory which has been modified in a server. Said data have been accessed in the server and sent to the client. The server contains a permanent data file on a disc and has a cache memory used by the local processors of the server. The client processes can however access the file while using the cache memories of the server and the client. File blocks from the disc are stored in the cache memory of the server and the client receives via the network file blocks from this and stores the blocks in the client cache memory. The data blocks in the later are tested with respect to the validity in the client process and if data have been found to be valid, they are accessed from the client cache memory.

JP 5-11983 discloses a method for verifying interfaces between programs in different declarative languages. In means for making an interface defining file a definition information is fed that defines an interface between programs corresponding to different descriptive languages for providing a definition file for an interprogram interface. In consistence testing means there is fed a program descriptive language source file and an interprogram interface defining file for testing interface consistency. Means are furthermore provided for automatically correcting the interprogram interface based upon the result of the consistency testing.

JP 63-86030 discloses a system for linking between different programming languages. A CPU includes a C-program module, a prologue interpreting module, and a fast node access module as functional parts. The CPU also contains a common data area together with a prologue stack, a great data base, and an information base secured in a prescribed memory space. Data transmission control is performed between these modules by means of the common data area and two exclusive stacks.

JP 62-293347 describes a development system for connecting together programs with different programming languages.

EP 498 130 discloses a method for verifying the compatibility between program modules communicating with each other in a computer system. Each component of a plurality of interacting system components are associated with a version identifier. The version identifier is stored in a place accessable by the other components. Each component independently reads the version identifier of each of the components with which it has to interact and compares this value with an internally stored compatibility register for determining whether the other component satisfies the requirements for compatibility with the verifying component. A component discovering an incompatibility signals an error to the system.

EP 495 279 discloses a method for communicating between two object oriented programs written in different programming languages. A generic send message function is arranged between the two programs for controlling the exchange of messages. For attaining this the generic send message function has access to a description of the classes in the other computer program. When access has been reached to such a description the generic send message function can effectively transmit messages between the different computer programs and also provide a possibility to create new objects.

In EP 371 942 there is described an interface between an application and a data base manager. An interface system includes a plurality of application program interfaces in the form of a set of real time services providing a precompiler developer with all the functionality required for communicating with a data base kernel in real time.

In EP 371 941 there is described an interface between applications written in different programming languages and data base managers or similar. For each of a plurality of functions supported by the software there is defined a generic application program interface or input point which has a plurality of parameters in a consistent form required by the system for executing the function. Each input point can be called by an application program written in some of a plurality of languages and transforms the parameters of the call to a consistent generic form for execution by the software system function.

In EP 343 682 there is described a method for developing and testing software. Design and test are directly connected to each other in a way that during the design course design data can be automatically used in the test.

In EP 315 493 there is described a virtual interface making software independent of the computer environment, i.e. the hardware, the operative system etc. The system includes a plurality of processes for performing one or several tasks required by application software in one or more distributed processors of a heterogenous or "destination" computer. In real time program code of the application software is preprocessed, compilated and linked with system interface modules for creating code that is executable by an operations system of the destination computer. The executable code that includes a number of functional calls to the processes is run by the operations system for admitting that the processes shall be able to perform the measures required by the application software.

In US 5 045 994 there is described a method for emulating in connection with development and testing of great program systems. An emulating system environment is used that simulates the real input/output interface of the application system. In this environment the user creates input/output transactions for later execution by the application system in a screen powered automized mode which is independent of and at the side of the application system.

In "Facilitating Mixed Language Programming in Distributed Systems", Roger Hayes and Richard D Schlichting, IEEE TRANSACTIONS ON SOFTWARE ENGINEERING VOL. SE-13, NO. 12, Dec. 1987, page 1254-1264 there is described a method for allowing procedural calls between different programming languages in the same program. It is based upon provision of a generic remote procedural call system for each language and use of a type system for describing a procedural interface as well as data to be transferred between the procedures. By defining standard mappings for each programming language data transformations required for transversal language calls can be provided, automatically in most cases, by means of active agents included in the interface between program components written in different languages.

### Summary.

A program designer using in a user program designed by him/her, an interface towards another program, the functions of which shall be used via the interface, today faces a number of problems.

If the designer needs to know more about the interface than that appearing from the interface description he must today study how other users have used the interface. This can however have been used erroneously, or also the conditions are different.

The designer can also look into the other program to see how the functions have been designed. However, this is contrary to the whole principle of using an interface. If the other program is changed without its designer knowing that the user program has used certain peculiarities in the design of the other program, it is not at all sure that it will function anymore.

If the designer of the user program wishes to test his program and its use via the interface, he can run it together with an available version of the other program. When the designer has managed to have those programs to function together, this only shows that his program functions together with precisely this specific embodiment of the other program. If the other program is updated or changed against another program offering the same functions, it is not at all sure that it will work anymore.

The designer of the user program can perhaps also get problems with the other program implying that it can be difficult to generate certain error cases. It can e.g. quite simply be the case that some of the errors can never happen in the other program as it has been made in the case in question. If the designer then writes an own simple variant of the other program there is a risk that he will also build in his own misunderstandings of how the interface functions.

Some of the problems in connection with designing interfaces can be summarized as follows:
- Usually semantic definitions of interfaces are lacking. To the extent that they exist, they are seldom complete and seldom strictly defined, this being particularly true for courses differing from the normal case.
- Test programs are often lacking for someone using an interface which can verify that this use is always correct, independently of internal changes in the cooperating program, as long as not the interface itself is affected.
- A single program can therefore not be certified independently but only together with specific editions of cooperating programs. Each time a program is changed not only this program but also all cooperating programs have to be recertified. A general object of the invention is to be able to completely define the function of an interface - i.e. to state a reference model for the interface - and to use this definition then to certify programs with respect to how they have used or offered this. interface. When the interaction over an interface between two software units is established, the invention shall admit description of this interaction and a support for securing that the definition of the interaction becomes complete and consistent.

A further object is to state a method to make possible testing of the function of an interface together with a software that shall interact with other software via the interface.

Still an object is to provide a reference model for an interface that makes possible that the software on the two sides of the interface can obtain more information with respect to the behaviour to the other part than that appearing from the syntactical definition of the interface. More particularly this information shall contain also a semantic definition describing the behaviours to be expected from the other part and to which extent the measures of the other part have to be supervised.

A further object of the invention is to make possible certification of a software unit, i.e. to show that it works correctly, also with respect to operation with other programs via interfaces by stating certain test programs which correctly reproduce all of the allowed behaviour pattern of the cooperating software, but for the rest does not reveal anything regarding its inner structure.

The method according to the invention is defined by independent claim 1 is characterized by creating a first and a second auxiliary program, by introducing code making the first auxiliary program as a model for program wares communicating with each other via the protocol by simulating all possible uses of a service interface, making the second auxiliary program as a complete and correct model simulating the complete and correct functions of the service interface as perceived by a program ware using it, allowing the first auxiliary program to be able to act both as a calling instance and an answering instance in the communication, allowing the two instances to perform all possible and permissible operations over the service interface, at the same time as they check that a program on the other side of the interface does not do anything impermissible.

The system according to the invention as defined by independent claim 8 is characterized by comprising code including a first and a second auxiliary program, the first auxiliary program forming a model for program wares communicating with each other via the protocol by simulating all possible uses of the service interface, the second auxiliary program forming a complete and correct model simulating the complete and correct functions of the service interface as perceived by a program ware using it, the first auxiliary program being able to act both as a calling instance and an answering instance in the communication, the two instances being able to perform all possible and permissible operations over the service interface, at the same time as they check that a program on the other side of the interface does not do anything impermissible.

Embodiments of the different aspects have obtained the characterizing features stated in the respective subclaims.

By a reference model for an interface is here intended i.a. that an interface is defined syntactically as well as semantically.

The whole reference model is executable.

The design of an interface implies, besides providing software for the interface itself, also the design of the auxiliary programs.

The first auxiliary program is created as a complete user of the interface including all permissible cases of use. The second auxiliary program handles all cases of use and shows, as seen from the perspective of the interface, what shall happen in the program that in practice offers the functionality of the interface. The auxiliary programs are as well visible as is the interface, they contain the complete information regarding the interface. The auxiliary programs are always handled together with the interface, they are updated and delivered together.

Of the auxiliary programs and the interface it is always possible to make an executable unit. The two auxiliary programs shall watch each other so as to make error print outs if the other program should make anything forbidden. This is used at first during testing of the auxiliary programs and later on, when either one of the auxiliary programs is used as a testing tool.

When designing a program using an interface the designer can study the first auxiliary program, in which the case(s) of use which shall be used can be found. Furthermore the designer can increase his understanding of how the program offering the services of the interface functions. Principally, they shall all function as the second auxiliary program.

As then this program shall be tested, an executable unit is created together with the interface and the second auxiliary program. This configuration offers the following advantages:
- The second auxiliary program is always available since it is supplied together with the interface.
- The second auxiliary program functions, since it is a reference for each design which shall offer the functions of the interface.
- The second auxiliary program is delimited since it is already configured, it does not require any further program which in turn requires another program etc.
- The second auxiliary program will provide clear error print outs in case of an erroneous use of the interface, also in those cases where other programs offering the services of the interface could be forgiving.

When designing a program which shall offer the functions of the interface it is possible to see from the first auxiliary program which possible cases of use there are. All these must be able to be handled. However, it can be assumed that a user software will not exceed these cases of use - this will be discovered when the user program is tested together with the second auxiliary program.

Furthermore it is not necessary to introduce all the possible ways in which the seondary software handles these. Thus, some error situations, which are described in the interface, can e.g. never occur in the design in question. Also if every user program must be prepared for all imaginable cases of error, all cases of error need not be able to occur in the implementation in question.

When testing the new program there is created an executable unit together with the first auxiliary program and the interface. All cases of use in the first auxiliary program are executed, and execution of all functionality is obtainable. The first auxiliary program watches each reaction from the second program.

By means of a so-called covering degree indicator it is possible to see the code portions of a new program which have been run through and such which have not. Code not associated with any other interface and which has not been run through can with ample reason be suspected to be erroneous.

### Brief Description of the Drawings.

The invention will now be described more closely with reference to the attached drawings on which
Fig. 1 illustrates a simple embodiment of the invention by means of a flow diagram,
Fig. 2 in the form of a block diagram is intended to provide the basis of a discussion of problems which can appear in a telephone switch due to the presence of many different incoming and outgoing line protocols,
Fig. 3 shows the same block diagram as in Fig. 2 but with auxiliary programs according to the invention added which make possible handling of the problems,
Fig. 4 is a flow diagram intended to illustrate how different operations in a telephone switch, exemplified as included in a usual telephone call, can be run and supervised by the auxiliary program according to the invention, and
Figs. 5-10 outgoing from the example shown in Fig. 4 serve to illustrate what the invention generally can involve in different cases of use.

### Detailed Description of Embodiments.

According to one important aspect of the invention it constitutes a reference model-for an interface intended to be used when defining and testing the function of the interface together with software which shall interact with other software via the interface. This reference model includes a first and a second auxiliary program, where the first auxiliary program is a model program simulating use of the interface and the second auxiliary program is a model program simulating that it offers the functions in the interface. The two programs are so designed that they can perform all possible and permissible operations over the interface, at the same time as they check that the other program does not make anything forbidden.

The description of the different embodiments of the function of the reference model indicated below is mostly, for the sake of simplicity, such that it indicates interaction of the two auxiliary programs with each other via the interface, a way of operation of the reference model which is only used for certification of the auxiliary programs.

In order to understand the function of the reference model when testing a new program ware on either side of the interface, one has to imagine this program ware as "replacing" the auxiliary program on the same side, since it is the auxiliary program of the other side which in such case is working. The auxiliary program thus "replaced" has normally no function in the testing thus in question, but can be used as an explanation model if and when errors appear.

In some cases it could perhaps in fact be conceivable with a market implementation of the reference model, that includes only one of the auxiliary programs, i.e. only the auxiliary program simulating use of the interface or only the auxiliary program simulating offering of the interface, if the function of the offering or using auxiliary program, respectively, is trivial or uninteresting for practical applications. For testing the auxiliary program included in the model when designing the model it could, however, also be possible to create a testing version of the model only for this testing and for this purpose also include the supplementing auxiliary program.

In some cases it could also be conceivable that the second auxiliary program, i.e. the offering one, includes all functions needed by a program offering the interface. The second auxiliary program can then be the program offering the functions also in the complete system. In such case the second auxiliary program could be designed so that the checking routines for detecting impermissible operations are ignorable. These are not needed in a tested and operating system, wherein they should only consume processor capacity.

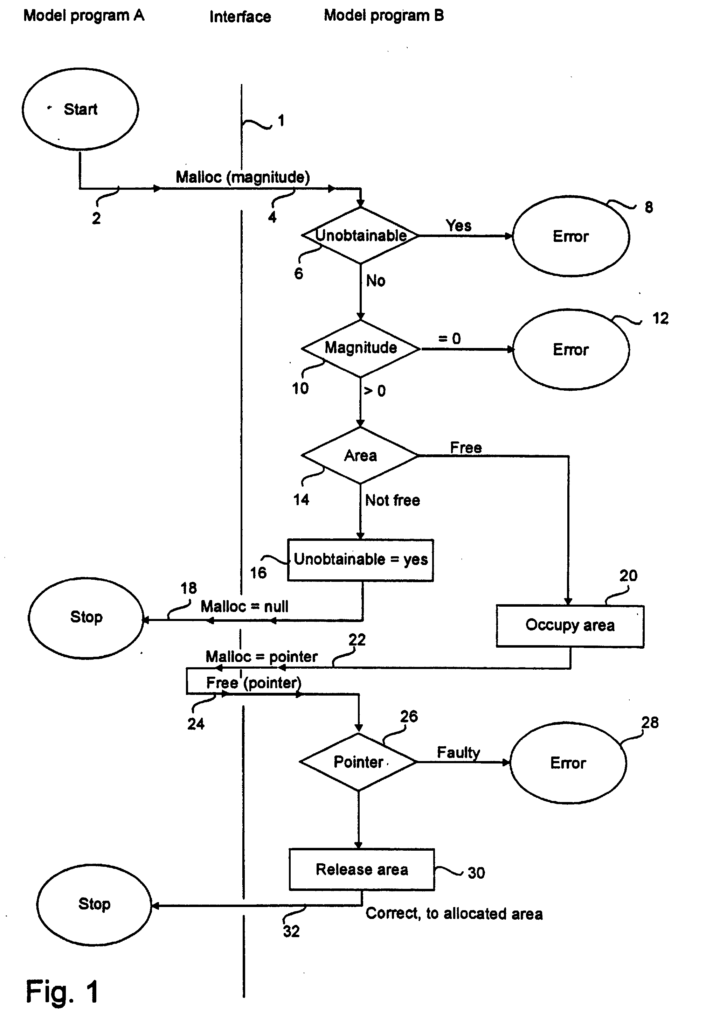

With reference to Fig. 1 a simple embodiment of the invention will now be described. As a background measures in a conceived situation will first be described, which are based upon the stand of the art.

A program, henceforth denominated PROG, needs a buffer area for occasional storing of data. A buffer area is a resource owned by the operations system, henceforth denominated OS.

PROG must then via an interface towards OS request access to this buffer area.

Assume that PROG is written in the programming language "C". A typical handbook in "C" would then give the following interface description:
"char *malloc *(magnitude)*

Occupies a continous buffer area of *magnitude* bytes, a pointer to the beginning of the occupied area is returned if the occupation is managed, otherwise a *null* pointer is returned."

The following can also be found:
"void free *(pointer)*

Releases a buffer area pointed to by *pointer,* and which has earlier been occupied with a *malloc*-call."

For an experienced programmer this is regarded to be fully enough information.

The following will however show that this information is far from enough:
- Assume that malloc returns a *null* pointer. This implies that the program PROG does not obtain access to the requested buffer area. Depending upon the internal design of the operations system either one of the following continuations may be possible:
   1) Try again, this was temporary.
   2) It is not possible to go on further, PROG has to be ended in a controlled way for unloading the operations system.
   3) Nothing can be done, it is impossible for the operations system to work without buffer areas and the whole system will directly crash.
- If PROG forgets to release the buffer area with free, will it then be lost?
- What happens if PROG makes free with a pointer pointing anywhere else than towards an earlier buffer area obtained by means of malloc?
   1) Nothing. The operating system discovers the mistake and when PROG eventually is ended, all buffer areas are released that FROG has used but forgotten to release.
   2) The operations system relies on PROG, which can result in completely unpredictable consequences.
- What happens if FROG requests a buffer area with the magnitude 0?
Does such a buffer area need to be released?

In practice the designer of the program PROG will guess how the operations system works and when PROG is completed, he/she can execute PROG together with an operations system, and misguesses, if any, can be corrected- this is what is used to be called debugging. The problem of this process is, however, that the only thing that has been secured is that PROG works as intended with this particular version of the operations system. If PROG shall be used with another operations system, or a newer version of the old one, it is again necessary to verify and possibly correct PROG.

It is not even sure that all functions can be tested. Generally, it is thus extremely difficult to have an operations system to answer "lack of buffer area" in exactly the desired moment. One wishing to test this program with respect to lack of buffer area must therefore himself write a test program simulating the measures of the operations system in this case. The problem of such a test program is that it has to be newly designed. If one finds errors, one easily believes that it is the test program that is wrong and corrects this instead. For this reason one does not in fact know, when all seems to be functioning, if the test program behaves as a real operations system would do.

So far only the problems of the PROG designer have been studied. But also a designer of an operations system has to be able to verify that a new updated operations system does not create problems for the user programs. Perhaps it is not enough to verify that PROG works together with the new operations system. Perhaps PROG dos not even use the function that has been changed.

Here a description will now be provided of how the memory allocating interface in question could look like when applying the invention.

According to the invention, and with reference to the flow diagram in Fig. 1, the interface indicated 1 is designed together with a model program A simulating use of the interface, and a model program B simulating that it offers the functions in the interface. The way of functioning of the model programs A and B is more particularly illustrated by means of the flow diagram in question.

In the present example the model program B is first started with a declared totally available area which from the beinning is declared as being unblocked. It is furthermore implemented to await then that someone shall request an area. When the model program A is started it will, according to arrow 2, via the interface 1 request access, arrow 4, to a buffer area, the presence of which is simulated such as if it is owned by the model program B. The request 4 is put forward by the call malloc(magnitude), wherein the concept "magnitude" is a parameter stating the magnitude of the requested buffer area, and which will be given a value when starting A.

Step 6 implies a check that it is not the question of a renewed attempt to occupy the buffer area, despite the fact that a preceding one has failed due to a lock. If the latter is the case the flow ends in step 8. Otherwise the flow leads to step 10, that contains a lock against a request of the user program for a buffer area with the magnitude 0. If such a request is indicated the flow ends in step 12. Otherwise the flow leads to step 14, that establishes whether there is any free area. If not, a lock is indicated in step 16, which leads to a null pointer being returned, arrow 18, to the program A. If an area is available it is occupied in step 20 and malloc=pointer is returned, arrow 22, to the program A. After use of the area it is returned to the program B with free(pointer), arrow 24. This leads to step 26 in the model program B, wherein it is checked that the right area has been returned. If this is not the case the error is indicated in step 28. Otherwise the area is released in step 30. The whole is ended, arrow 32, in the program A. The model program B is stopped when the buffer using program has ended its execution. Then it is checked that all delivered buffer area has been returned, if not, an error print out is provided. Both of the model programs A and B have recorded that occurred during the execution.

Of course, the interface could also include operations for writing and reading in the buffer area. As they do not contribute to the explanation of the invention in the present context they have been omitted.

From the reference model shown in Fig. 1 the following conclusions can be drawn regarding the interface.

From the point of view of the user program A:
- It is not allowed for a user, which has already obtained stop at a malloc call, to try again, cf. step 6.
- It is not allowed to request a buffer of magnitude=0, cf. step 10.
- The area must be returned with free. Free is only allowed to be used for areas obtained by malloc and which have not already been returned, cf. arrow 24.

From the point of view of the buffer managing program B:
- Requested buffer areas are always greater than 0, cf. step 10.
- The pointer appearing with free need not be checked.
- The user program will return an obtained buffer area.

If the user program should violate these rules, this will be discovered when it is tested against the model program B.

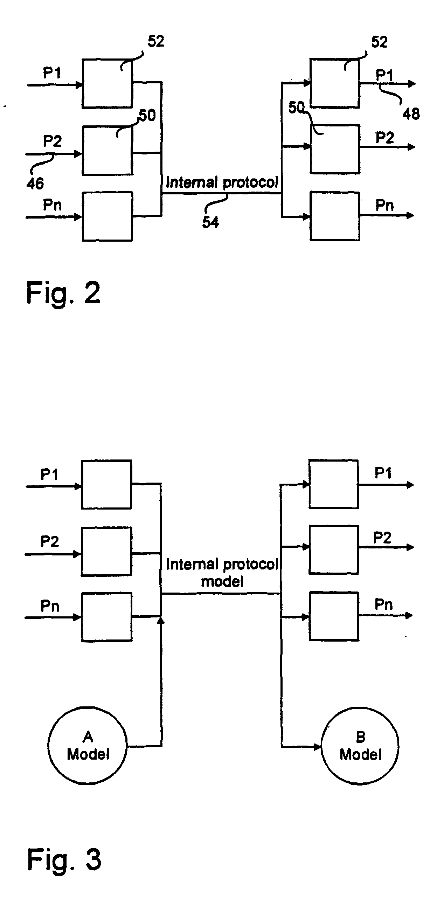

The reference model for interfaces is applicable also for more complex interfaces. As an example it will now be shown how it can be applied for a protocol. In the following a discussion will be provided with reference to Figs. 2 and 3 of problems which can appear at the handling of a system for public telephone exchanges, and how such problems principally may be solved by means of the invention.

The object of a telephone exchange can be said to interconnect an incoming call with another, outgoing call.

For setting up a call a protocol is needed for transferring control information, e.g. which destination it is desired to reach (the telephone number). For historical and technical reasons there are a great number of different such protocols, indicated by P1, P2...Pn in Fig. 2. One of the more wellknown, which may e.g. be assumed to be P1 in Fig. 2, is the one used for a usual press-button telephone, where tone signals on the speach line inform of the number desired to be reached. Another wellknown example, which may e.g. be P2 in Fig. 2, is dial signalling wherein the digits are represented by interruption pulse trains. The digit 4 is e.g. represented by four interruption pulses in a sequence.

Assume that calling is made from a dial apparatus, incoming calls according to arrow 46 in Fig. 2, to an apparatus for tone dialling, outgoing calls according to arrow 48. It may e.g. be the question of a call to a company exchange with direct dialling, wherein the internal number is transferred from the public exchange to the company exchange in the form of tone codes.

This means that a program is needed, indicated by a block 50 in Fig. 2, which can count consecutive interruption pulses, and another program, indicated by a block 52 in Fig. 2, which can translate a digit to a tone code and send it out on the line. For the programs 50 and 52 to be able to communicate with each other they must have a common "language" - a protocol - by means of which they can communicate. In this language such concepts as interruption pulse or tone code are not used. Therefore, all telephone exchanges have an internal protocol, indicated by means of the line 54 in Fig. 2, to which or from which all conceivable line protocols can be translated.

If there is now a need to introduce a further protocol in such a telephone exchange, it should be arranged that this new protocol can cooperate with whichever of the existing protocols. Furthermore it should be secured that all existing protocols can cooperate with the new protocol. The complexity of designing a further protocol thus increases with the number of already existing protocols.

In the case according to Fig. 2 the internal protocol 54 may be regarded as an interface of the kind with which the invention is concerned. If the reference model according to the invention is introduced, a configuration as the one shown in Fig. 3 is obtained. This reference model on the one hand includes a model program A representing a calling party ("A side" according to usual linguistic usage within the telecommunication world), and on the other hand a model program B representing the called party ("B side"). However, one essential thing distinguishes this example from the preceding one, viz. that one of the models sees the other one via the internal protocol, and that the interface against the other side therefore is the interface against the internal protocol. The A and B models are designed in a way that they can perform all possible and permissible operations over the internal protocol 54, at the same time as they check that there are no impermissible operations over the interface. In order that these checks may be able to be performed at the interface, the internal protocol is replaced by an internal protocol model, which then furthermore includes program ware routines for discovering impermissible operations, if any.

With the configuration shown in Fig. 3 it is possible to "ring", i.e. set up a call, between A and B, but not to speak, which is controlled by another interface. But it is also possible to "ring" from A on any of the protocols P1-Pn, as well as it is possible to receive a "call" in B.

The model programs A and B do not require any own hardware, since they are pure program ware units. They shall always be available together with the internal protocol 54. For example, if an incoming protocol Px has been made ready, it shall be possible to run it at once against the B model.

The A model shall be able to do all that an incoming protocol can do. The B model shall be able to do everything that an outgoing protocol can do and which can be mediated on the internal protocol 54. This implies that:
- an outgoing protocol, e.g. P2 must be prepared to handle all that the A model can provide, which implies that it shall either be able to send further, or reject, i.e. inform "cannot do it". Since this outgoing protocol P2 can handle all that it is exposed to by the A model, no other incoming protocol can surprise it with a new, earlier untested or unforeseen functionality.
- an incoming protocol, e.g. P2 must be prepared for the case that the outgoing protocol, e.g. P1, is not able to handle functions existing in P2. If e.g. the incoming protocol P2 in question is intended for a press-button telephone, recalling will function if the outgoing protocol is also P2, but if a long distance call is made, e.g. towards the outgoing protocol P1, it will appear that P1 does not have this function. This must then P2 on the incoming side be prepared for. The B model shall be able to appear either as if it has or not has recall.
- an incoming protocol, e.g. P2, can have functions not handled by the internal protocol. This shall then appear from the A model, which shall then not handle these functions.

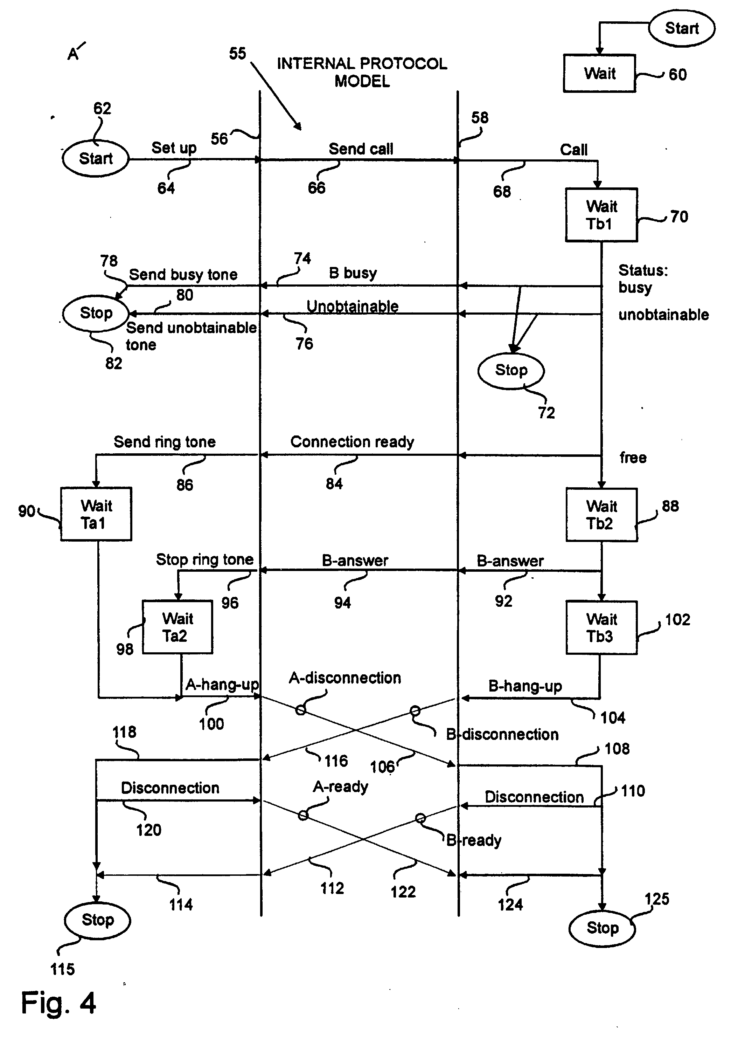

Fig. 4 is a flow diagram intended to illustrate how different operations in a telephone exchange according to Figs. 2 and 3, exemplified as executed in an ordinary telephone speach, can be run and supervised between a model A' by an A subscriber, and a model B' by a B subscriber, which are connected to an internal protocol 55, via each an interface 56 and 58, respectively.

In the example a smaller number of cases of use for the.A and B side are reflected, which each will be emphasized particularly when they turn up. In a real internal protocol there are many more signals between the two sides and many more things may happen not only on the A and B sides, respectively, but also in the internal protocol, but this has been removed for making the example more illustrative. In particular, the internal protocol has been simplified. This is also realized with program ware and has in a realistic case own events - it can e.g. inform one side that it has lost the contact with the other side.

In the context one of the essential features of the invention deserves to be emphasized. This is that no one of the subscriber models has any idea of whether the party on the other side of the internal protocol 55 is also a model or whether it is any of the "real" protocols P1-Pn. Although the below description of the flows appearing in Fig. 4 for the sake of simplicity mainly has been outlined such that it is the A' and B' models which communicate via the internal protocol 55, this does not imply that there is the question of one process, but of two completely independent, accidentally interlaced processes. These processes, viz. one A' process and one B' process, are "clinically" separated.

The B' model is started with the parameters Tb1 Tb2 and Tb3 valued, and a status assigned for the B' subscriber, and starts by waiting for a call indicated at 60. Tb1 indicates how long time the call shall take. Tb2 indicates how long time that then shall pass before a B' response, but can also indicate that B' does not answer at all. Tb3 indicates how long it then shall take before B' shall hang up. The status of the B' subscriber is busy, free or locked.

The A' model is started, indicated at 62, with parameters Ta1 and Ta2 valued. Ta1 indicates how long time the A' model waits on a response from the other side before it hangs up, and Ta2 indicates how long the A' model shall remain in speech condition before it hangs up.

If required by the implementation, the internal protocol is started to be able to mediate messages between the two sides. The internal protocol does not in this example take any own initiatives. In another, more complicated example, it would also be conceivable that it is started with a parameter indicating after how long time after start the internal protocol informs the two sides that the connection has been broken, whereupon the two sides are allowed to disconnect in a controlled way.

A waiting model stops its waiting when a message arrives from the other side and then instead follows this message. In this connection and for full understanding of the below description, it is then important to realize that each message has three parts, viz. what the sending side wishes, what the internal protocol mediates, and how the receiving side interprets it, respectively.

The A' model starts with a request for setting up a call, arrow 64, which via a signal "send a call" in the internal protocol, arrow 66, leads to a call, arrow 68, towards the B' model. This stops its waiting and starts, at 70, to measure the time Tb1. After this time the B' model continues according to the subscriber status which according to the above was assigned at the start.

If the status of the' B' subscriber is busy or unobtainable, the course of events of the B' model is stopped, indicated at 72, and via a signal "busy" or "unobtainable", respectively, in the internal protocol, arrows 74 and 76, respectively, the A' model interprets the message as "send a busy tone", arrow 78, and "send an unobtainable tone", arrow 80. The A' model shall of course not send any tone - it cannot. A real protocol would, however, in this case send a tone. The course of events of the A' model is stopped, indicated at 82.

The events 68, 74, 78 and 68, 76, 80 represent first and second cases of use for the A side, viz. that the B side at a call from the A side gives "busy" and "unobtainable", respectively, back.

If the status of the B' subscriber is free, the signal "call ready" is sent in the internal protocol, arrow 84, towards the A side, which is interpreted by the A' model as "send dial tone", arrow 86. Of course, the A' model can neither in this case send a tone. As in the above described cases with "send busy tone" and "send unobtainable tone", there is the question only of a description providing suggestions of what could be done in a real protocol. If there is a dial tone in the context, it shall be sent now. The B' model at the same time starts, indicated at 88, to measure the time Tb2, and the A' model starts, indicated at 90, to measure the time Ta1.

After the time established by the parameter Tb2 the B' model sends an answer towards the A' model, arrow 92, which by the internal protocol is mediated as "B answer", arrow 94, and is interpreted by the A' model as "stop dial tone", arrow 96. The A' model stops measuring the time Ta1 and instead starts measuring the time Ta2, indicated at 98, after the request has been performed.

The A' model hangs up, indicated by arrow 100, either after the time established by the parameter Ta1 for awaiting an answer from the other side, or after the time established by the parameter Ta2 for speach condition, depending upon which of the two time measurements that is active.

The events 84, 86, 90 and 92, 94, 96, 98 represent third and fourth cases of use for the A side, respectively, viz. that when the A side calls, the B side is free but does not answer, and the B side answers but does not hang up, respectively. In a corresponding way first and second cases of use for the B side appear here, viz. that the A side sets up a call, but hangs up again before the B side has answered, or hangs up after the B side has answered, respectively.

In connection with sending out the message B answer, arrow 94, the B' model starts measuring the time Tb3, indicated at 102. After this time has elapsed the B' model hangs up, indicated by arrow 104. This represents a fifth case of use for the A side, viz. that when the A side calls, B answers and then hangs up. In a corresponding way a third case of use appears here for the B side, viz. that the A side sets up a call, but does not hang up before the B side has hanged up.

From the above description with reference to Fig. 4 some semantic rules can be derived, e.g. that:
- The A side cannot hang up before the B side has returned status,
- neither the A side nor the B side is allowed to send any further message after unobtainable/busy,
- B answer is only allowed to be sent after B-free.

For the A' model disconnection to stop is performed via signal "A disconnection" in the internal protocol according to arrow 106, signal to the B side with a request regarding acknowledgement message according to arrow 108, and the corresponding acknowledgement "disconnection" according to arrow 110 from the B side, the signal "B ready" in the internal protocol according to arrow 112, and arrow 114 to stop 113. For the B' model disconnection is performed via the signal "B disconnection" in the internal protocol according to arrow 116, signal to the A side with request for acknowledgement message according to arrow 118 and a corresponding acknowledgement message "disconnection" according to arrow 120 from the A side, signal "A ready" according to arrow 122 in the internal protocol, and arrow 124 to stop 125.

From the above it appears that no side must disconnect without having made sure that the other side has acknowleged this. Although not shown, it can also be conceived to put in a delay each between the steps 108 and 110, and between the steps 118 and 120, respectively.

Starting from the example shown in Figure 4, a more detailed analysis will be made of what the invention generally implies when it is the question of a communication case.

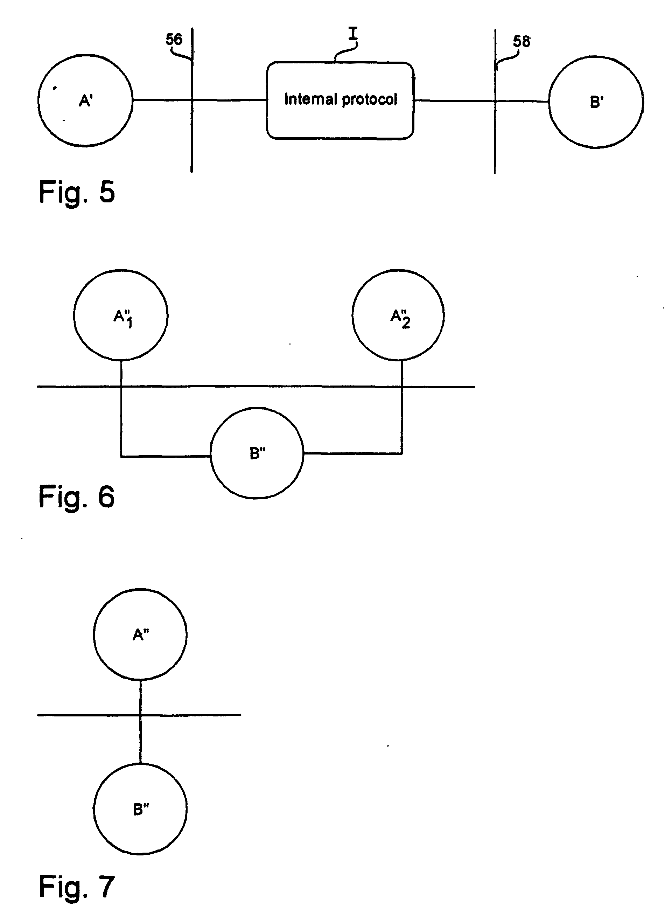

Assume first that there is the question of a complete line interface in a public telephone station. Fig. 4 can furthermore be redrawn, while omitting all details, in the way shown in Fig. 5. What is obtained is then something that can be characterized as a reference model consisting of three components, viz. besides the A' and B' models also an internal protocol model I, with the interface 56 located between the A' model and the I model, and the interface 58 located between the I model and and the B' model.

If one now studies the I model more closely the following may be found.

In the most simple case A' and B', or the applications they represent, execute on the same processor in the same local station. There may be the question of a local telephone speach.

However, as known there is no greater difference between ringing to a telephone on the other side of the earth. In this case the same I model represents parts of the telephone network of all earth, an extremely complex technical system. The number of interfaces that such an international telephone speach passes on its way is enormous also for an experienced designer of telephone networks. The internal protocol model I is, however, a manageable abstract model also in case of a complex long distance call.

Furthermore, as a matter of fact, the same telephone shall be able to be used as well for calling as for receiving speeches. As seen from this point of view there is no difference at all between the A' and B' models, they are two individuals of exactly the same type. For the sake of the continuing discussion and for illustrating the inventive connection with other embodiments, such as those according to Figs. 1 and 3, they can therefore be denominated A"1 and A"2, respectively. For the same reason the I model can be renamed B" and Fig. 5 be transformed to the form shown in Fig. 6. As shown, the two interface lines in Fig. 5 again coincide to one single interface, which it is in reality.

Since according to the above A"1 can be regarded as equivalent with A"2, they can, with reference to Fig. 7, be combined to A". It will then be seen that the result becomes the interface reference model defined according to the invention, wherein A" can be characterized as a first auxiliary program that simulates use of the interface, and B" can be characterized as a second auxiliary program that simulates that it offers the functions in the interface, in a way that the two programs can perform all possible and allowed operations over the interface, at the same time as they check that the other program does not make anything impermissible. In the embodiment according to Fig. 4 the "A' model" and the "B' model" thus together form the first auxiliary program, and the internal protocol model 55 forms the second auxiliary program. As a matter of fact the interfaces 56 and 58 are the same interface, viz. the one for which the reference model according to the invention is intended.

In a wider perspective the above illustrated equivalence can be interpreted as follows:

The A side transfers information to the B side and gets it back at a later occasion. If it is one and the same A individual, B is a memory function according to that being the case at the embodiment according to Fig. 1. If there is the case of two A individuals, B is a communication function, such as e.g. in Fig. 4.

What can be abstracted away in this model - and this is important - is how the B side internally handles the information. From the point of view of the model A no difference can be seen with regard to whether the B side only receives the message as it comes, in order then to return it unchanged, or changed in the way described by the interface, or whether the B side e.g. encrypts the message, divides into packets great enough, sends it out on a connection etc., in order to then receive the packets, put them together to a message, decrypt it and leave it back to A.

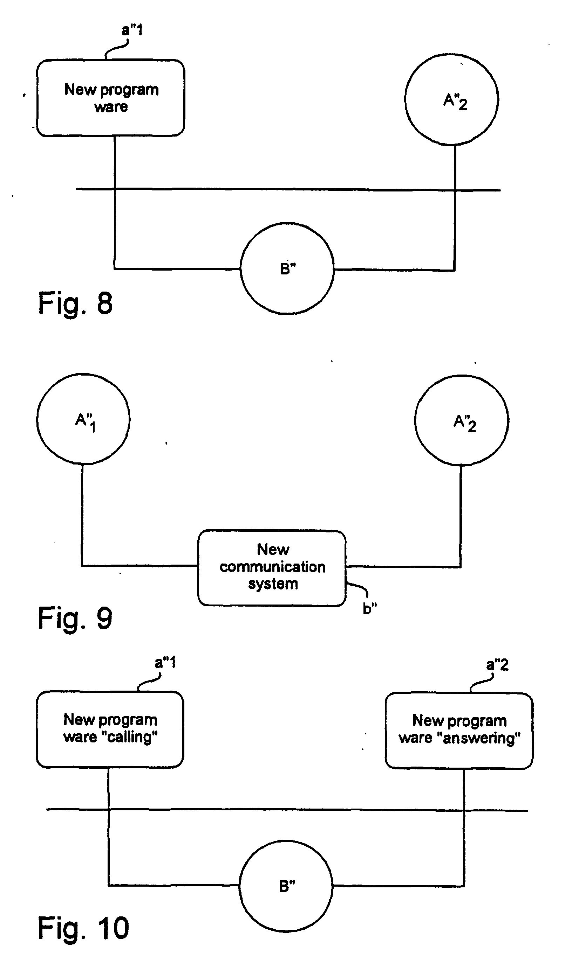

In the case that the second auxiliary program represents a protocol three cases of use for the reference model can appear according to the following:
1) Use of a communication interface, cf. Fig. 8.
   In this case testing shall be made of a new version a"1 of a user program ware together with the interface, which can represent one of the A individuals. a" shall be able to "ring", via the "second auxiliary program B", to the second A individual A"2, which in its capacity of "first auxiliary program" shall be able to be called by the new program ware. The case of use also includes the case where A"2 calls a"1.
2) Design of a new communication system, cf. Fig. 9.
   In this case the B individual, here designated b", is a new communication system, that shall be tested together with the interface by the "first auxiliary program" consisting of the two A individuals A"1 and A"2. The new communication system b" shall be able to take care of the case that A"1 and A"2 shall be able to "ring" to each other in all conceivable ways.
3) Communication within a user, cf. Fig. 10.
   In this case the two A individuals may be replaced by a "calling" part a"1 and an "answering" part a"2 of a new user program ware, respectively, which shall be tested together with the interface by the "second auxiliary program" B". As a matter of fact, there is thus the question of one and same new program ware function, that "calls" a copy of itself and transfers the information.

The two copies a"1 and a"2 communicate with each other in a way which does not necessarily need to be understandable for another program. What shall be verified in this configuration is that they understand each other also when messages have passed B, and there e.g. has been exposed to some modification with respect to its contents. For designing and certifying program ware that communicates with itself, there is thus needed a B model for the communication proper. This B model represents the most simple way of carrying through this communication.

An embodiment of how to be able to use the method according to the invention purely practically will now be described more closely below.

The starting point is a very simple interface specified in a traditional way, and the purpose is to study more in detail what happens when the definition of the interface is tightened with a reference model.

In a system for the paneuropean digital mobile telephone system GSM it is possible for a subscriber in a network to leave this network and move into the cover area of another network and there obtain the same service as in its home network. In one and the same country there may be several, usually competing network operators which with their networks cover the same geographical area. Different operators therefore have different cooperation partners for offering the own group of subscribers the best possible cover also outside the own home area. Subscribers belonging to not cooperating networks shall however be rejected, on the one hand for competing reasons, and on the other hand because they cannot be debited if there is no cooperation agreement regulating this. Thus, if an alien subscriber requests service, one has to decide whether this subscriber belongs to a cooperating network operator or not, in order to be able to establish whether service shall be offered or rejected. The subscriber requesting service i.a. identifies itself with a PLMN parameter (PLMN = Public Land Mobile Network), that states the network operator to which the subscriber belongs. We shall now decide whether the own network cooperates with the operator thus stated.

This function is offered over the interface which has here been chosen as an example.

Before a closer presentation of the program ware it should be emphasized that the reference model methodology according to the invention is not bound to any particular computer environment. The program wares which are here described will therefore be neutral with respect to program language, operations system, computer configuration etc. More particularly, and for facilitating the understanding, they are written in a so called pseudo code, which builds upon intuitive understanding.

The syntactical definition of the interface has the following appearance in pseudo code:

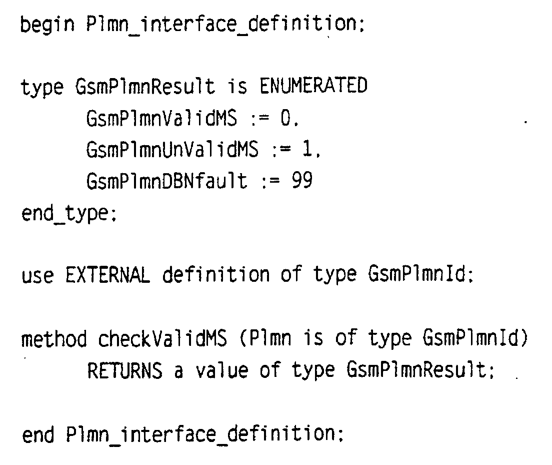

With the method checkValidMS the interface defines a possiblity of finding out whether a mobile subscriber (MS) belongs to a cooperating PLMN. The PLMN of the mobile subscriber is stated in the accompanying parameter Plmn, which has the format GsmPlmnId. The answer to the question is given in the return value, which is of the type GsmPlmnResult.

The result can be either one of the following three. GsmPlmnValidMS implies that the subscriber can be offered service. GsmPlmnUnValidMS implies (although this is not clearly shown here) that the subscriber shall be rejected. The third alternative GsmPlmnDBNfault, implies that unfortunately no answer can be given. DBNfault indicates error in the data base.

GsmPlmnId is defined somewhere else. There is thus a definition which we can and shall use, but we do not care about what it really looks like. We can use an authentic definition, but we can also find our own.

The principles of the reference model can be applied to this interface according to the following. The first auxiliary program defined according to the invention can have the following look:

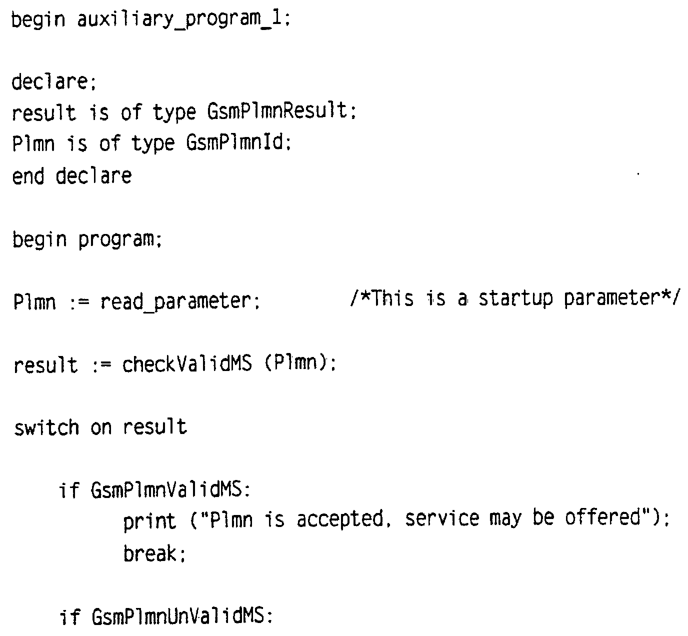

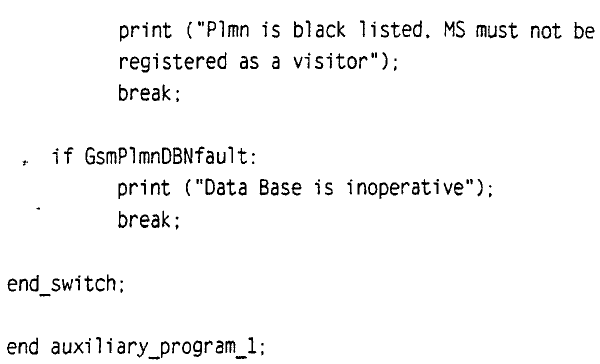

The second auxiliary program defined according to the invention can have the following look:

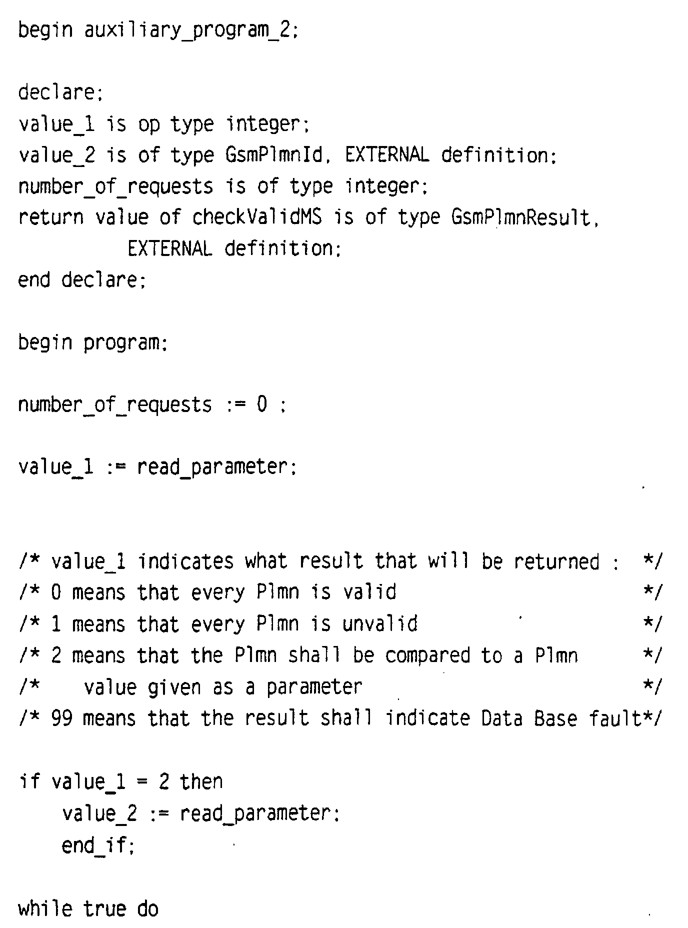

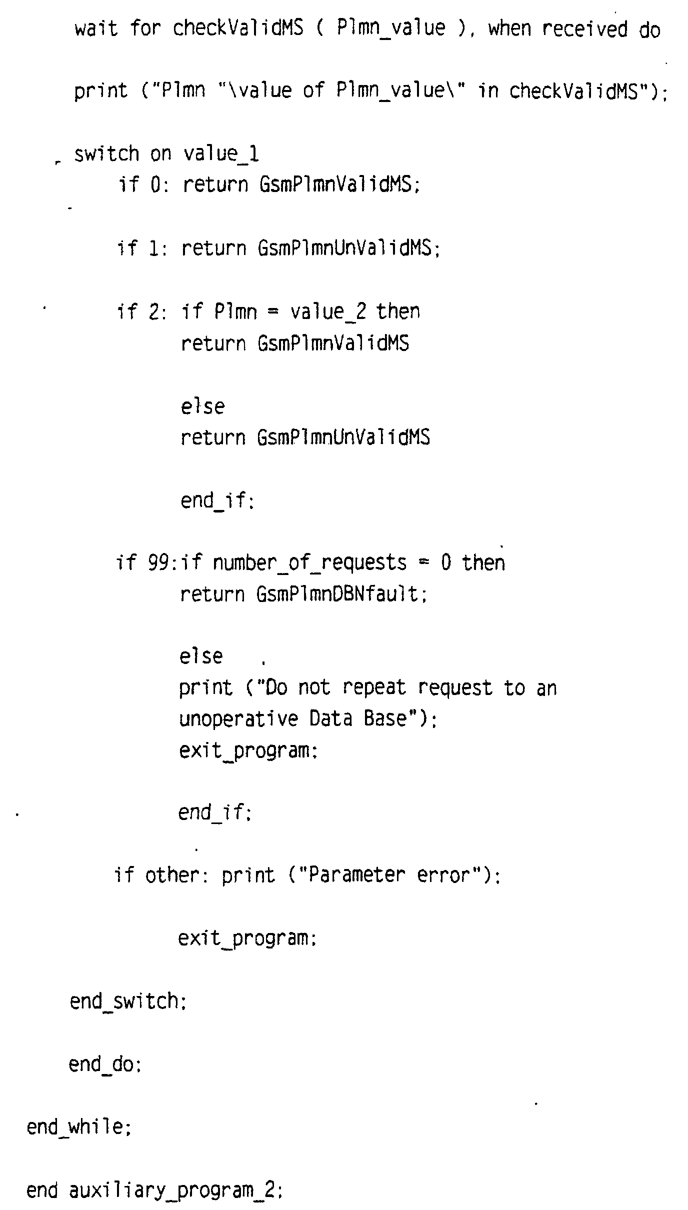

Furthermore there is needed a definition of GsmPlmnId, the format of the Plmn statement. This definition is part of another interface, and three different cases are conceivable:
1) There is a prepared correct definition describing the authentic format of a Plmn statement. If it is easy to handle we can use it. (The correct format for Plmn is three+two digits.)
2) There is a reference model also for the interface GsmPlmnId. In that case we use, besides the interface GsmPlmnId, its second auxiliary program.
3) There is only the interface proper, i.e. the fact that the format type is named GsmPlmnId. In that case an own definition of GsmPlmnId has to be prepared. Principally it can look anyhow, it can be said that Plmn is stated with one digit or a text string. This definition is used as long as there is no definition of type 1) or 2).

We thereby have a complete reference model. It is used according to the following.
A) There is now also a semantic model of the interface. The first auxiliary program shows a typical use of the interface. As a matter of fact one could copy it as a template into a user program. From the auxiliary program the semantic non-rule appears that the interface does not decide whether the subscriber shall be offered service or not if information cannot be given, a using program has to decide upon this itself.
   The second auxiliary program contains a semantic rule: It states that if GsmPlmnDBNfault has been received, it is not allowed to try again as a user. For the program offering the interface this means that if the data base - or whatever it is that raises difficulties - allows trying again, it is the offering program that tries again and first when it has given up, it answers with GsmPlmnDBNfault. In that way it will always become meaningless for the using program to try again.
B) A newly designed user program shall be tested. This calls the interface, the functions of which are now offered by the second auxiliary program. The following advantages can be seen by using this auxiliary program instead of a program offering this interface in a system application:
   - There is a functioning and easily available auxiliary program together with the interface. The system application, if there is at all an executable one, is considerably more complicated and therefore perhaps maybe not completely perfect.
   - There is no need to configure a complete data base for performing the test. Most errors which would be found would probably result from the fact that the data base has been wrongly configured, or from faults in the program using the data base. In such a case it easily happens that faults in the own program will be missed.
   - If one has managed to configure the data base so that it functions, it is not completely trivial to get it to stop to function, i.e. to give the answer GsmPlmnDBNfault.
   - The auxiliary program writes out the Plmn that comes into question. If the statement has been distorted on the way, this can be discovered when the auxiliary program writes out the Plmn that is tested. If the request should be repeated in one and the same operation - not forbidden per se, but unnecessary - this will also be discovered.
C) A newly designed program that offers the interface shall be tested. It is configured together with the interface and the first auxiliary program. This can then quite simply put questions towards the data base program, whether the Plmn value is acceptable. If this should be done by means of pure system applications, a complete mobile telephony system would principally be required. The first auxiliary program should be easily controllable, so that it fastly can be run with a great number of different Plmn values.

The invention has a number of important advantages.

By means of the invention interfaces become completely defined, i.e. both syntactically and semantically. The semantics becomes formal and exactly defined.

An interface, wherein the semantics can be described verbally, or not at all, requires experience of the designer that shall use it. It can then be the question of experience that is obtained by means of experiments or mistakes, and still not surely is neither correct nor complete, and which furthermore perhaps cannot be simply informed to other designers.

However, if the interface is provided with model programs according to the invention, all knowledge is associated with the interface and the user of the interface knows that he/she has all necessary knowledge of it. Furthermore the user knows that all other designers have the same knowledge of the interface. This implies that it is not necessary to take into consideration that the other party can have done another interpretation of the semantics, and that it is therefore necessary to check all the time that the other party does not do anything which one self interprets as impermissible. Such tests cost design efforts and execution time when the interface is used.

By means of the interface models it is possible to make a formal certification of a program ware unit as seen from the interfaces it uses and the ones it offers. This certification is done independently of all the different versions, variants, editions and combinations of program ware units that are included, or may be included in the other side of the interfaces.

A program ware unit which has been certified once with this method, remains certified. It never needs to be recertified because the environment is changed. The program ware unit can be supplied with the reference model programs and anyone can execute these. Certification protocols are not needed, certification can be repeated whenever desired.

When this method is used the model programs are provided together with the interface. The model programs make it easier for the customer to use the interface.

In other cases the model programs are not supplied, but then they have been used for certification of another supplied program ware, and then one refers in the certification protocol to the fact that this program ware has been quality guaranteed by means of model programs.

## Claims

1. A method for providing a reference model for a communication system,
in which program wares (A,B) shall be able to communicate with each other via a protocol (I) using the services offered over a service interface (56,58),
**characterized by** creating a first (A") and a second (B") auxiliary program, by introducing code
making the first auxiliary program (A") as a model for program wares communicating with each other via the protocol (I) by simulating all possible uses of the service interface (56,58),
making the second auxiliary program (B") as a complete and correct model simulating the complete and correct functions of the service interface (56,58) as perceived by a program ware using it,
allowing the first auxiliary program to be able to act both as a calling instance (A"1) and an answering instance (A"2) in the communication,
allowing the two instances (A"1,A"2) to perform all possible and permissible operations over the service interface (56,58), at the same time as they check that a program on the other side of the service interface (56,58) does not do anything impermissible.

2. A method according to claim 1, **characterized by** creating, maintaining and supplying the two programs (A",B") together with the service interface (56/58).

3. A method according to claim 1 or 2, **characterized by** introducing code
making the first auxiliary program (A") able to act as a complete user of the interface (56,58), including all permissible cases of use, both in the role as a calling instance (A"1) and in the role as an answering instance (A"2), and
making the second auxiliary program (B") able to handle all cases of use and to generate all conceivable results, also faults, which can appear during handling of the cases of use and which are defined in the interface, and to show what could happen in a program of a certain design, that in practice shall offer the functionality of the interface.

4. A method according to any of claims 1-3, **characterized by** introducing code into said first and second auxiliary programs (A",B") resulting in
the communication between the two first auxiliary program instances (A"1,A"2) being able to be performed over the second auxiliary program (B"),
only the answering instance (A"2) being addressed, and
the second auxiliary program (B") being able to generate all possible fault cases that can affect a protocol in practice.

5. A method according to any of claims 1-4, **characterized by** introducing code making the first and second auxiliary programs (A",B") as visible as the interface (56,58) and to contain a complete information and definition of the interface (56,58).

6. A method according to any of claims 1-5, **characterized by** creating the first and second auxiliary programs (A",B") together with the interface (56,58) to form an executable unit, and introducing code making the first auxiliary program (A") able to create the two auxiliary program instances (A"1,A"2), and enabling communication between said instances by means of the second auxiliary program (B"), via the interface (56,58).

7. A method according to claim 6, **characterized by** introducing code
enabling the first and second auxiliary programs (A",B") to monitor a program on the other side of the interface (56,58) in order to give fault print outs if this program should do anything impermissible, and
enabling the first auxiliary program (A") to check that a user program with which it communicates, does not do anything impermissible.

8. A communication system comprising a reference model for said communication system in which program wares (A,B) shall be able to communicate with each other via a protocol (I) using the services offered by a service interface (56,58),
**characterized by** code including a first (A") and a second (B") auxiliary program, wherein
the first auxiliary program (A") forms a model for program wares communicating with each other via the protocol (I) by simulating all possible uses of the service interface (56,58),
the second auxiliary program (B") forms a complete and correct model simulating the complete and correct functions of the service interface (56,58) as perceived by a program ware using it,
the first auxiliary program being able to act both as a calling instance (A"1) and an answering instance (A"2) in the communication,
the two instances (A"1,A"2) being able to perform all possible and permissible operations over the service interface (56,58), at the same time as they check that a program on the other side of the service interface (56,58) does not do anything impermissible.

9. A communication system according to claim 8, **characterized by** the first auxiliary program (A") including first auxiliary functionality enabling it to act both as a calling instance (A"1) and an answering instance (A"2) in the communication, and the second auxiliary program (B") including second auxiliary functionality representing the services of the protocol (I), wherein the two instances (A"1,A"2) can perform all possible and permissible operations over the interface (56,58), at the same time as they check that the program on the other side of the interface does not do anything impermissible.

10. A system according to claim 9, **characterized by** the first auxiliary functionality (A") including means enabling it to act as a complete user of the interface (56,58), including all permissible cases of use, both in the role as a calling instance (A"1) and in the role as an answering instance (A"2), and the second auxiliary program (B") including second auxiliary functionality including means enabling it to handle all cases of use and generate all conceivable results, also faults, which can appear during handling of the cases of use and which are defined in the interface (56,58), and to show what could happen in a program of a certain design, that in practice shall offer the functionality of the interface.

11. A system according to claim 9 or 10, **characterized by** means
enabling communication between the two first auxiliary functionality instances (A"1,A"2) to be performed over the second auxiliary functionality (B"),
enabling only the answering instance (A"2) to be addressed, and
enabling the second auxiliary functionality (B") to generate all possible fault cases that can affect the usage of a protocol in practice.

12. A system according to any of claims 9-11, **characterized in that** the first and second auxiliary functionalities (A",B") are as visible as the interface (56,58) and contain a complete information and definition of the interface.

13. A system according to any of claims 9-12, **characterized by** the first and second auxiliary functionalities (A",B") together with the interface (56,58) forming an executable unit, and by means enabling the two auxiliary functionality instances (A"1,A"2) to be created by the first auxiliary functionality (A"), and to communicate with each other by means of the second auxiliary functionality, via the interface (56,58).

14. A software system according to claim 13, **characterized by** the first and second auxiliary functionalities (A",B") including means allowing them to monitor a program on the other side of the interface (56,58) and to provide fault print outs if this program should do anything impermissible, and the first auxiliary functionality including means allowing it to check that a user program with which it communicates, does not do anything impermissible.

15. A system according to claim 8, for testing (Fig. 8) new user program ware (a"1) which shall be able to communicate with existing user program wares, **characterized by**
the first and second auxiliary programs (A",B") simulating the use by a user program ware of the interface (56,58) and the services of the protocol (I), respectively, and allowing the two auxiliary programs to perform all possible and permissible operations over the interface, at the same time as they check that a program on the other side of the interface does not do anything impermissible,
means for bringing the new program ware (a"1) into communication connection with the first auxiliary program (A"2) via the second auxiliary program (B"), and
means for executing operations provided in the two auxiliary programs (A"2,B").

16. A system according to claim 8 for testing new protocol program ware (b",Fig.9), **characterized by**
said first auxiliary program (A") simulating such use of the interface (56,58) by a user program ware that together with the interface (56,58) new program ware can be tested, and for allowing the auxiliary program (A") to perform all possible and permissible operations over the interface, and to check that protocol program ware (b") tested by means of the interface (56,58) does not do anything impermissible,
means for bringing two copies (A"1,A"2) of the auxiliary program into communication connection with each other via the new program ware (b"), and
means for executing operations provided in the two copies.

17. A system according to claim 8, for testing new user program ware (a",Fig.10), **characterized by**
the first auxiliary program (A") simulating offering of the functions of the protocol (I) via the interface (56,58) while enabling testing of new user program ware together with the interface, and performing of all possible and permissible operations over the interface and checking that a program on the other side of the interface does not do anything impermissible,
means for bringing two copies (a"1,a"2 of the new user program ware into communication connection with each other via the second auxiliary program (B") and,
means for executing operations provided in the the second auxiliary program (B").

## Patentansprüche

1. Verfahren zum Bereitstellen eines Referenzmodells für ein Kommunikationssystem,
bei dem Programmerzeugnisse (A, B) die Fähigkeit zum Kommunizieren miteinander haben sollen, über ein Protokoll (I) unter Verwendung der Dienste, die über eine Dienstschnittstelle (56, 58) angeboten werden,
**gekennzeichnet durch** das Erzeugen eines ersten (A") und eines zweiten (B") Hilfsprogramms **durch** Einführen von Code
**durch** Ausbilden des ersten Hilfsprogramms (A") als Modell für Programmerzeugnisse, zum Kommunizieren miteinander über das Protokoll (I), **durch** Simulieren sämtlicher möglicher Anwendungsfälle der Dienstschnittstelle (56, 58),
Ausbilden des zweiten Hilfsprogramms (B") als vollständiges und korrektes Modell zum Simulieren der vollständigen korrekten Funktionen der Dienstschnittstelle (56, 58), wie sie **durch** ein Programm wahrgenommen wird, die sie verwendet,
rein Zulassen der Möglichkeit, dass das erste Hilfsprogramm die Fähigkeit zum Wirken sowohl als rufende Instanz (A"1) als auch als antwortende Instanz (A"2) bei der Kommunikation hat,
Zulassen der Möglichkeit, das die zwei Instanzen (A"1, A"2) sämtliche mögliche und zulässige Betriebsschritte ausführen, über die Dienstschnittstelle (56, 58) zur selben Zeit, zu der sie prüfen, dass ein Programm auf der anderen Seite der Dienstschnittstelle (56, 58) nicht irgendetwas Unzulässiges ausführt.

2. Verfahren nach Anspruch 1, **gekennzeichnet durch** das Erzeugen, Warten und Zuführen der zwei Programme (A", B") zusammen mit der Dienstschnittstelle (56, 58).

3. Verfahren nach Anspruch 1 oder 2, **gekennzeichnet durch** das Einführen von Code zum
Bewirken, dass das erste Hilfsprogramm (A") die Fähigkeit hat, als ein vollständiger Anwender der Schnittstelle (56, 58) zu wirken, einschließlich sämtlicher zulässiger Anwendungsfälle, sowohl in der Rolle als anrufende Instanz (A"1) als auch in der Rolle als antwortende Instanz (A"2), und
Bewirken, dass das zweite Hilfsprogramm (B") die Fähigkeit hat, sämtliche Fälle der Anwendung handzuhaben, sowie zum Erzeugen denkbarer Ergebnisse, ebenso Fehler, die während der Handhabung der Anwendungsfälle auftreten, und die in der Schnittstelle definiert sind, sowie zum Aufzeigen, was in einem Programm eines bestimmten Entwurfs passieren könnte, das in der Praxis die Funktionalität der Schnittstelle anbieten soll.

4. Verfahren nach einem der Ansprüche 1 bis 3, **gekennzeichnet durch** das Einführen von Code in das erste und zweite Hilfsprogramm (A", B") mit dem Ergebnis, dass
die Kommunikation zwischen den zwei ersten Hilfsprogramminstanzen (A"1, A"2) die Fähigkeit hat, über das zweite Hilfsprogramm (B") ausgeführt zu werden, lediglich die antwortende Instanz (A"2) adressiert wird, und
das zweite Hilfsprogramm (B") die Fähigkeit hat, sämtliche mögliche Fehlerfälle zu generieren, die ein Protokoll in der Praxis beeinflussen können.

5. Verfahren nach einem der Ansprüche 1 bis 4, **gekennzeichnet durch** das Einführen von Code, die dazu führen, dass das erste und zweite Hilfsprogramm (A", B") so sichtbar wie die Schnittstelle (56, 58) sind, und eine vollständige Information und Definition der Schnittstelle (56, 58) enthalten.

6. Verfahren nach einem der Ansprüche 1 bis 5, **gekennzeichnet durch** das Erzeugen des ersten und zweiten Hilfsprogramms (A", B") zusammen mit der Schnittstelle (56, 58) zum Bilden einer ausführbaren Einheit, und **durch** das Einführen von Code unter Ausbildung des ersten Hilfsprogramms (A") mit der Fähigkeit zum Erzeugen von zwei Hilfsprogramminstanzen (A"1, A"2) sowie zum Erzeugen einer Kommunikation zwischen den Instanzen mittels dem zweiten Hilfsprogramm (B") über die Schnittstelle (56, 58).

7. Verfahren nach Anspruch 6, **gekennzeichnet durch** das Einführen von Code, wodurch
das erste und zweite Hilfsprogramm (A", B") mit der Fähigkeit ausgestattet sind, ein Programm an der anderen Seite der Schnittstelle (56, 58) zu überwachen, zum Abgeben von Fehlerausdrucken, wenn dieses Programm irgendetwas Unzulässiges machen sollte, und
das zweite Hilfsprogramm (A") in die Lage versetzt wird, zu prüfen, dass ein Anwenderprogramm, mit dem es kommuniziert, nicht irgendetwas Unzulässiges tut.

8. Kommunikationssystem mit einem Referenzmodell für das Kommunikationssystem, bei dem Programmerzeugnisse (A, B) die Fähigkeit haben sollen, miteinander über ein Protokoll (I) zu kommunizieren, unter Verwendung der Dienste, die von einer Dienstschnittstelle (56, 58) angeboten werden,
**gekennzeichnet durch** Code mit einem ersten (A") und einem zweiten (B") Hilfsprogramm, wobei
das erste Hilfsprogramm (A") ein Modell für Programmerzeugnisse bildet, die miteinander über das Protokoll (I) kommunizieren, **durch** Simulation sämtlicher möglicher Anwendern der Dienstschnittstelle (56, 58),
das zweite Hilfsprogramm (B") ein vollständiges und korrektes Modell zum Simulieren der vollständigen und korrekten Funktionen der Dienstschnittstelle (56, 58) bildet, wie sie **durch** ein Programmerzeugnis wahrgenommen wird, das sie verwendet,
das erste Hilfsprogramm die Fähigkeit hat, sowohl als rufende Instanz (A"1) als auch als antwortende Instanz (A"2) bei der Kommunikation zu wirken,
die zwei Instanzen (A"1, A"2) die Fähigkeit haben, sämtliche mögliche und zugelassene Betriebsschritte über die Dienstschnittstelle (56, 58) auszuführen, zur selben Zeit, zu der sie prüfen, dass ein Programm auf der anderen Seite der Schnittstelle (56, 58) nicht irgendwas Unzulässiges ausführt.

9. Kommunikationssystem nach Anspruch 8, **dadurch gekennzeichnet, dass** das erste Hilfsprogramm (A") eine erste Hilfsfunktionalität enthält, die es in die Lage versetzt, sowohl als anrufende Instanz (A"1) als auch als antwortende Instanz (A"2) bei der Kommunikation zu wirken, und dass das zweite Hilfsprogramm (B") eine zweite Hilfsfunktionalität enthält, zum Darstellen der Dienste des Protokolls (I), wobei die zwei Instanzen (A"1, A"2) sämtliche mögliche und zugelassene Betriebsschritte über die Schnittstelle (56, 58) ausführen können, zu derselben Zeit, zu der sie prüfen, dass das Programm auf der anderen Seite der Schnittstelle nicht irgendwas Unzulässiges tut.

10. System nach Anspruch 9, **dadurch gekennzeichnet, dass** die erste Hilfsfunktionalität (A") ein Mittel enthält, die sie in die Lage versetzt, als vollständiger Anwender der Schnittstelle (56, 58) zu wirken, umfassend sämtliche zulässige Fälle der Anwendung, sowohl in der Rolle als anrufende Instanz (A"1) als auch in der Rolle als antwortende Instanz (A"2), und dass das zweite Hilfsprogramm (B") eine zweite Hilfsfunktionalität enthält, mit einem Mittel, die sie in die Lage versetzt, sämtliche Fälle der Anwendung handzuhaben und sämtliche denkbare Ergebnisse, auch Fehler, zu generieren, die während der Handhabung der Anwendungsfälle erscheinen und die in der Schnittstelle (56, 58) definiert sind, zum Darstellen, was in einem Programm mit einem bestimmten Entwurf passieren könnte, das praktisch die Funktionalität der Schnittstelle anbieten soll.

11. System nach Anspruch 9 oder 10, **gekennzeichnet durch** eine Vorrichtung, wodurch
das Ausführen einer Kommunikation zwischen den zwei ersten Hilfsfunktionalitätsinstanzen (A"1, A"2) über die zweite Hilfsfunktionalität (B") ermöglicht wird,
ermöglicht wird, dass lediglich die antwortende Instanz (A"2) zu adressieren ist, und
die zweite Hilfsfunktionalität (B") in die Lage versetzt wird, sämtliche mögliche Fehlerfälle zu generieren, die die Anwendung eines Protokolls in der Praxis beeinflussen können.

12. System nach einem der Ansprüche 9 bis 11, **dadurch gekennzeichnet, dass** die erste und zweite Hilfsfunktionalität (A", B") so sichtbar wie die Schnittstelle (56, 58) sind und eine vollständige Information und Definition der Schnittstelle enthalten.

13. System nach einem der Ansprüche 9 bis 12, **dadurch gekennzeichnet, dass** die erste und zweite Hilfsfunktionalität (A", B") zusammen mit der Schnittstelle (56, 58) eine ausführbare Einheit bildet, indem ermöglicht wird, dass die zwei Hilfsfunktionalitätsinstanzen (A"1, A"2) durch die erste Hilfsfunktionalität (A") erzeugt wird, und dass sie miteinander mittels der zweiten Hilfsfunktionalität über die Schnittstelle (56, 58) kommunizieren.

14. Softwaresystem nach Anspruch 13, **dadurch gekennzeichnet, dass** die erste und zweite Hilfsfunktionalität (A", B") ein Mittel umfassen, die es ihnen ermöglicht, ein Programm auf der anderen Seite der Schnittstelle (56, 58) zu überwachen, und Fehlerausdrucke dann bereitzustellen, wenn dieses Programm irgendetwas Unzulässiges ausführen sollte, und dass die erste Hilfsfunktionalität ein Mittel enthält, die es ihr ermöglicht, zu prüfen, dass ein Anwenderprogramm, mit dem sie kommuniziert, nicht irgendetwas Unzulässiges tut.

15. System nach Anspruch 8, zum Testen (Fig. 8) eines neuen Anwenderprogrammerzeugnis (a"1), das die Fähigkeit zum Kommunizieren mit existierenden Anwenderprogrammerzeugnissen haben soll, **dadurch gekennzeichnet, dass**
das erste und zweite Hilfsprogramm (A", B") jeweils die Anwendung durch ein Anwenderprogrammerzeugnis von der Schnittstelle (56, 58) und den Diensten des Protokolls (I) simuliert, und ermöglicht, dass die zwei Hilfsprogramme sämtliche mögliche und zulässige Betriebsschritte über die Schnittstelle ausführen, zu derselben Zeit, zu der sie prüfen, dass ein Programm auf der anderen Seite der Schnittstelle nicht irgendetwas Unzulässiges tut,
ein Mittel vorgesehen ist, zum Bewirken einer Kommunikationsverbindung zwischen dem neuen Programmerzeugnis (a"1) und dem ersten Hilfsprogramm (A"2) über das zweite Hilfsprogramm (B"), und
ein Mittel zum Ausführen der Betriebsschritte, bereitgestellt in den zwei Hilfsprogrammen (A"2, B").

16. System nach Anspruch 8 zum Testen eines neuen Protokollprogrammerzeugnis (b", Fig. 9), **dadurch gekennzeichnet, dass**
das erste Hilfsprogramm (A") eine derartige Anwendung der Schnittstelle (56, 58) durch ein Anwenderprogrammerzeugnis simuliert, die sich zusammen mit dem neuen Schnittstellen-(56, 58)-Programmerzeugnis testen lässt, und zum Ermöglichen, dass das Hilfsprogramm (A") sämtliche mögliche und zulässige Betriebsschritte über die Schnittstelle ausführt, sowie zum Prüfen, dass das mittels der Schnittstelle (56, 58) getestete Protokollprogrammerzeugnis (b") nicht irgendetwas Unzulässiges tut,
ein Mittel ist, das bewirkt, dass zwei Kopien (A"1, A"2) des Hilfsprogramms in Kommunikationsverbindung zueinander über das neue Programmerzeugnis (b") gelangen, und
ein Mittel zum Ausführen der Betriebsschritte, die durch die zwei Kopien bereitgestellt sind.

17. System nach Anspruch 8, zum Testen eines neuen Anwenderprogrammerzeugnis (a", Fig. 10), **dadurch gekennzeichnet, dass**
das erste Hilfsprogramm (A") das Anbieten von Funktionen des Protokolls (I) über die Schnittstelle (56, 58) simuliert, bei Ermöglichen eines Tests eines neuen Anwenderprogrammerzeugnis zusammen mit der Schnittstelle, und sämtliche mögliche und zulässige Betriebsschritte über die Schnittstelle ausführt, und prüft, dass ein Programm auf der anderen Seite der Schnittstelle nicht irgendetwas Unzulässiges tut,
ein Mittel zum Bewirken, dass zwei Kopien (a"1, a"2) des neuen Anwenderprogrammerzeugnis in Kommunikationsverbindung zueinander über das zweite Hilfsprogramm (B") gelangen, vorgesehen ist, und
ein Mittel zum Ausführen der Betriebsschritte, die in dem zweiten Hilfsprogramm (B") vorgesehen sind.

## Revendications

1. Procédé pour fournir un modèle de référence pour un système de communication,
dans lequel des articles à programmes (A, B) devront pouvoir communiquer entre eux par un protocole (I) en utilisant les services offerts par l'intermédiaire d'une interface de services (56, 58),
**caractérisé par** la création de premier (A") et second (B") programmes auxiliaires, par introduction d'un code
faisant du premier programme auxiliaire (A") un modèle pour des articles à programmes communiquant entre eux par l'intermédiaire du protocole (I) en simulant toutes les utilisations possibles de l'interface de services (56, 58),
faisant du second programme auxiliaire (B") un modèle complet et correct simulant les fonctions complètes et correctes de l'interface de services (56, 58) telles que perçues par un article à programme l'utilisant,
permettant au premier programme auxiliaire de pouvoir agir à la fois en tant que partie appelante (A"1) et partie répondante (A"2) dans la communication,
permettant aux deux parties (A"1, A"2) d'effectuer toutes les opérations possibles et permises par l'intermédiaire de l'interface de services (56, 58), en même temps qu'elles contrôlent qu'un programme de l'autre côté de l'interface de services (56, 58) n'exécute rien d'interdit.

2. Procédé selon la revendication 1, **caractérisé par** la création, le maintien et la fourniture des deux programmes (A", B") ensemble avec l'interface de services (56/58).

3. Procédé selon la revendication 1 ou 2, **caractérisé par** l'introduction d'un code
permettant au premier programme auxiliaire (A") d'agir en tant qu'utilisateur complet de l'interface (56, 58), comprenant tous les cas admissibles d'utilisation, à la fois dans le rôle d'une partie appelante (A"1) et dans le rôle d'une partie répondante (A"2), et
permettant au second programme auxiliaire (B") de traiter tous les cas d'utilisation et de générer tous les résultats concevables, également les défauts, qui peuvent apparaître pendant le traitement des cas d'utilisation et qui sont définis dans l'interface, et de montrer ce qui pourrait se produire dans un programme d'une certaine conception, qui, en pratique, offrira la fonctionnalité de l'interface.

4. Procédé selon l'une quelconque des revendications 1 à 3, **caractérisé par** l'introduction d'un code dans lesdits premier et second programmes auxiliaires (A", B"), ce qui a pour résultat que
la communication entre les deux premières parties de programmes auxiliaires (A"1, A"2) peut être réalisée par l'intermédiaire du second programme auxiliaire (B"),
seule la partie répondante (A"2) est adressée, et
le second programme auxiliaire (B") peut générer tous les cas possibles de défauts qui peuvent affecter un protocole en pratique.

5. Procédé selon l'une quelconque des revendications 1 à 4, **caractérisé par** l'introduction d'un code amenant les premier et second programmes auxiliaires (A", B") à être visibles en tant que l'interface (56, 58) et à contenir une information et une définition complètes de l'interface (56, 58).

6. Procédé selon l'une quelconque des revendications 1 à 5, **caractérisé par** la création des premier et second programmes auxiliaires (A", B") en forme avec l'interface (56, 58) pour former une unité exécutable, et l'introduction d'un code permettant au premier programme auxiliaire (A") de créer les deux parties de programmes auxiliaires (A"1, A"2), et la permission d'une communication entre lesdites parties au moyen du second programme auxiliaire (B"), par l'intermédiaire de l'interface (56, 58).

7. Procédé selon la revendication 6, **caractérisé par** l'introduction d'un code,
permettant aux premier et second programmes auxiliaires (A", B") de contrôler un programme sur l'autre côté de l'interface (56, 58) afin de fournir des sorties imprimées de défauts si ce programme devait effectuer quelque chose d'interdit, et
permettant au premier programme auxiliaire (A") de vérifier qu'un programme d'utilisateur avec lequel il communique n'effectue rien d'interdit.

8. Système de communication comportant un modèle de référence pour ledit système de communication, dans lequel des articles à programmes (A, B) devront pouvoir communiquer entre eux par l'intermédiaire d'un protocole (I) en utilisant les services offerts par une interface de services (56, 58),
**caractérisé par** un code comprenant des premier (A") et second (B") programmes auxiliaires, dans lequel
le premier programme auxiliaire (A") forme un modèle pour des articles à programmes communiquant entre eux par l'intermédiaire du protocole (I) en simulant toutes les utilisations possibles de l'interface de services (56, 58),
le second programme auxiliaire (B") forme un modèle complet et correct simulant les fonctions complètes et correctes de l'interface de services (56, 58) telle que perçu par un article à programme l'utilisant,
le premier programme auxiliaire étant capable d'agir à la fois en tant que partie appelante (A"1) et partie répondante (A"2) dans la communication,
les deux parties (A"1, A"2) pouvant effectuer toutes les opérations possibles et autorisées par l'intermédiaire de l'interface de services (56, 58), en même temps qu'elles vérifient qu'un programme situé de l'autre côté de l'interface de services (56, 58) n'effectue rien d'interdit.

9. Système de communication selon la revendication 8,
**caractérisé en ce que** le premier programme auxiliaire (A") comprend une première fonctionnalité auxiliaire lui permettant d'agir à la fois en tant que partie appelante (A"1) et partie répondante (A"2) dans la communication, et le second programme auxiliaire (B") comprend une seconde fonctionnalité auxiliaire représentant les services du protocole (I), dans lequel les deux parties (A"1, A"2) peuvent effectuer toutes les opérations possibles et autorisées par l'intermédiaire de l'interface (56, 58), en même qu'elles vérifient que le programme situé de l'autre côté de l'interface n'effectue rien d'interdit.

10. Système selon la revendication 9, **caractérisé en ce que** la première fonctionnalité auxiliaire (A") comprend un moyen lui permettant d'agir en tant qu'utilisateur complet de l'interface (56, 58), comprenant tous les cas autorisés d'utilisation, à la fois dans le rôle d'une partie appelante (A"1) et dans le rôle d'une partie répondante (A"2), et le second programme auxiliaire (B") comprenant une seconde fonctionnalité auxiliaire comprenant un moyen lui permettant de traiter tous les cas d'utilisation et de générer tous les résultats concevables, également des défauts, qui peuvent apparaître pendant le traitement des cas d'utilisation et qui sont définis dans l'interface (56, 58), et de montrer ce qui pourrait se produire dans un programme d'une certaine conception, qui, en pratique, offrira la fonctionnalité de l'interface.

11. Système selon la revendication 9 ou 10, **caractérisé par** des moyens
permettant à une communication entre les deux premières parties de fonctionnalités auxiliaires (A"1, A"2) d'être réalisée par l'intermédiaire de la seconde fonctionnalité auxiliaire (B"),
permettant l'adressage uniquement de la partie répondante (A"2), et
permettant à la seconde fonctionnalité auxiliaire (B") de générer tous les cas de défauts possibles qui peuvent affecter l'utilisation d'un protocole en pratique.

12. Système selon l'une quelconque des revendications 9 à 11, **caractérisé en ce que** les première et seconde fonctionnalités auxiliaires (A", B") sont aussi visibles que l'interface (56, 58) et contiennent une information et une définition complètes de l'interface.

13. Système selon l'une quelconque des revendications 9 à 12, **caractérisé en ce que** les première et seconde fonctionnalités auxiliaires (A", B") forment ensemble avec l'interface (56, 58) une unité exécutable, et par des moyens permettant aux deux parties de fonctionnalités auxiliaires (A"1, A"2) d'être créées par la première fonctionnalité auxiliaire (A"), et de communiquer l'une avec l'autre au moyen de la seconde fonctionnalité auxiliaire, par l'intermédiaire de l'interface (56, 58).

14. Système à logiciel selon la revendication 13, **caractérisé en ce que** les première et seconde fonctionnalités auxiliaires (A", B") comprennent des moyens leur permettant de contrôler un programme de l'autre côté de l'interface (56, 58) et de produire des sorties imprimées de défauts si ce programme effectue quelque chose d'interdit, et la première fonctionnalité auxiliaire comprend des moyens lui permettant de vérifier qu'un programme d'utilisateur avec lequel elle communique n'effectue rien d'interdit.

15. Système selon la revendication 8, pour tester (figure 8) un nouvel article à programme d'utilisateur (a"1) qui devra pouvoir communiquer avec des articles à programmes d'utilisateurs existant, **caractérisé en ce que**
les premier et second programmes auxiliaires (A", B") simulent l'utilisation par un article à programme d'utilisateur de l'interface (56, 58) et des services du protocole (I), respectivement, et permettre aux deux programmes auxiliaires d'effectuer toutes les opérations possibles et autorisées par l'intermédiaire de l'interface, en même temps qu'ils vérifient qu'un programme situé de l'autre côté de l'interface n'exécute rien d'interdit,
des moyens sont destinés à mettre le nouvel article à programme (a"1) en connexion de communication avec le premier programme auxiliaire (A"2) par l'intermédiaire du second programme auxiliaire (B"), et
des moyens sont destinés à exécuter des opérations prévues dans les deux programmes auxiliaires (A"2, B").

16. Système selon la revendication 8 pour tester un nouvel article à programme de protocole (b", figure 9), **caractérisé en ce que**
ledit premier programme auxiliaire (A") simule une utilisation de l'interface (56, 58) par un article à programme d'utilisateur telle qu'un nouvel article à programme peut être testé avec l'interface (56, 58), et est destiné à permettre au programme auxiliaire (A") d'effectuer toutes les opérations possibles et autorisées par l'intermédiaire de l'interface, et à vérifier qu'un article à programme de protocole (b") testé au moyen de l'interface (56, 58) n'exécute rien d'interdit,
des moyens sont destinés à mettre deux copies (A"1, A"2) du programme auxiliaire en connexion de communication l'une avec l'autre par l'intermédiaire du nouvel article à programme (b"), et
des moyens sont destinés à exécuter des opérations prévues dans les deux copies.

17. Système selon la revendication 8, pour tester un nouvel article à programme d'utilisateur (a", figure 10), **caractérisé en ce que**
le premier programme auxiliaire (A") simule une offre des fonctions du protocole (I) par l'intermédiaire de l'interface (56, 58) tout en permettant de tester un nouvel article à programme d'utilisateur ensemble avec l'interface, et effectue toutes les opérations possibles et autorisées par l'intermédiaire de l'interface et vérifie qu'un programme situé de l'autre côté de l'interface n'exécute rien d'interdit,
des moyens sont destinés à mettre deux copies (a"1, a"2) du nouvel article à programme d'utilisateur en connexion de communication l'une avec l'autre par l'intermédiaire du second programme auxiliaire (B"), et
des moyens sont destinés à exécuter des opérations prévues dans le second programme auxiliaire (B").
